# EUROPEAN PATENT APPLICATION

(11) **EP 4 818 572 A1**
(43) Date of publication of application: **07.10.2026**
(21) Application number: 24897784.5
(22) Date of filing: 16.07.2024
(51) Int. Cl.: F17C 13/04, F17C 13/12, F16K 17/38

(54) **VALVE ASSEMBLY HAVING OVERPRESSURE PROTECTION FUNCTION AND AEROSOL HAVING THE SAME**

(30) Priority: 27.11.2023 KR 20230166886
(71) Applicant: Seung Il Corporation, Cheonan-si Chungcheongnam-do 31040 (KR)
(72) Inventor: JANG, Ha Jin, Incheon 22192 (KR); KOH, Chang Hee, Incheon 22007 (KR); LEE, Ki Hong, Incheon 21561 (KR); KIM, Hyo Bin, Incheon 21381 (KR)
(74) Representative: AWA Sweden AB
(86) International application number: PCT/KR2024/010184
(87) International publication number: WO 2025/116183

(57) **Abstract**

According to the present disclosure, disclosed is a valve assembly capable of relieving an overpressure state. The valve assembly comprises: a mounting portion having a hollow portion inside and mounted on a mount cup; a stem housing having a communication flow path enabling communication of the hollow portion and a receiving space and having an extension pipe extending from the mounting portion; a valve stem having one side passing through a through-hole formed in a central portion of the mount cup and the other side slidably disposed in the hollow portion, and having an orifice selectively communicating with the hollow portion by means of sliding; and a flow path blocking valve portion configured to block an inlet of the communication flow path when overpressure occurs. The flow path blocking valve portion comprises: a closing member formed of a ball-shaped steel material; a fusible insert accommodated in the extension pipe so that one side thereof faces the inlet while completely accommodating and holding the closing member therein, and configured to block a gap between the inlet and the closing member disposed to cover the inlet after being melted at a preset temperature or higher to release the holding of the closing member; and a cover member mounted on the extension pipe so as to cover the other side of the fusible insert, and configured to prevent the fusible insert from being displaced within the extension pipe.

## Description

### Technical Field

The present disclosure relates to a valve assembly capable of relieving an overpressure state, and a spraying container including the same.

### Background Art

In general, a spraying container refers to a container that, in a state in which contents to be sprayed (a fluid or a gas) are sealed inside a housing, allows the contents to be sprayed to the outside by using an internal pressure. Representative examples of the spraying container include a portable gas container, a spray mosquito repellent, a hair spray, a portable aerosol fire extinguisher, a gas lighter container, and the like.

In general, the spraying container includes a housing (can) for containing the contents, a mount cup fixed to an upper end of the housing, and a valve assembly fixed to a central protruding portion of the mount cup. The valve assembly is configured to maintain a sealed state when the spraying container is unused and to allow the contents to be discharged only when the spraying container is used.

However, the spraying container may reach an overpressure state due to a thermal, mechanical, or chemical reason during use or storage, and the valve assembly discharges a predetermined amount of the contents, or is in the sealed state, so that, when the spraying container reaches the overpressure state, a malfunction (expansion or deformation, and the like) of the spraying container occurs.

Such malfunction of the spraying container may cause problems in that the spraying container reaches a dangerous situation such as an explosion of the spraying container. Accordingly, in the related art, a method of additionally providing various structures for releasing overpressure gas to the outside has been used. However, these structures, due to releasing a large quantity of the overpressure gas to the outside at one moment, there were problems of the occurrence of risks of other types of safety accidents.

### Disclosure

### Technical Problem

One object of the present disclosure is directed to providing a valve assembly having an overpressure relieving function that, upon reaching an overpressure state, is capable of relieving overpressure and has a structure formed more robustly, and a spraying container including the same.

Another object of the present disclosure is directed to providing a valve assembly, which has an overpressure relieving function capable of stably performing a function of relieving an overpressure upon reaching an overpressure state, and a spraying container including the same.

### Technical Solution

To achieve the objects of the present disclosure, there is provided a valve assembly mounted on a mount cup fixed to an upper end of a housing including a receiving space, according to one embodiment of the present disclosure. The valve assembly may comprise: a stem housing including a mounting portion having a hollow portion therein and mounted on the mount cup, and an extension pipe having a communication flow path communicating the hollow portion and the receiving space and extending from the mounting portion; a valve stem having one side passing through a through-hole formed in a central portion of the mount cup and the other side disposed to allow sliding in the hollow portion, and including an orifice selectively communicating with the hollow portion by the sliding; and a flow path blocking valve portion configured to block an inlet of the communication flow path when overpressure occurs, in which the flow path blocking valve portion may comprise: a closing member formed of a ball-shaped steel material; a fusible insert received in the extension pipe so that one side thereof, in a state of completely receiving and holding the closing member therein, faces the inlet, and configured to block a gap between the inlet and the closing member disposed to cover the inlet after being melted at a preset temperature or higher to release the holding of the closing member; and a cover member mounted on the extension pipe so as to cover the other side of the fusible insert, and configured to prevent the fusible insert from being displaced within the extension pipe.

According to one example related to the present disclosure, the cover member may include a vent hole communicating between the inlet and the receiving space, and a portion in which the vent hole is not formed may be formed to overlap with a part of the closing member, so that inflow of the closing member into the receiving space through the vent hole is prevented by the closing member being displaced from the fusible insert.

According to one example related to the present disclosure, a central axis of the vent hole may be formed to correspond to a central axis of the extension pipe.

According to one example related to the present disclosure, the cover member may include: a first portion having an outer diameter larger than an inner diameter of the extension pipe; and a second portion formed at both end portions of the first portion and having an outer diameter smaller than the inner diameter of the extension pipe.

According to one example related to the present disclosure, the extension pipe may be formed of the same material as the cover member.

According to one example related to the present disclosure, the fusible insert may include: a body portion formed in a hollow shape so as to receive the closing member therein; a first catching portion protruding at predetermined intervals along an inner circumference at one side of the body portion; and a second catching portion protruding at predetermined intervals along an inner circumference at the other side of the body portion, and formed to prevent displacement of the closing member together with the first catching portion.

According to one example related to the present disclosure, the first and second catching portions may be disposed to be alternated with each other along an axial direction of the body portion.

According to one example related to the present disclosure, the first and second catching portions each may include: a first inclined portion protruding to be inclined toward an inside in which the closing member is received from an outside; and a second inclined portion protruding to be inclined toward an outside from the inside in which the closing member is received, at an inclination angle larger than the first inclined portion.

According to one example related to the present disclosure, when the fusible insert is melted, the closing member may be received in and caught on the inlet, and the fusible insert may be thermally fused to the closing member caught on the inlet and to the inlet.

According to one example related to the present disclosure, a tip end of the inlet may include a step portion protruding inward so that the closing member is caught.

According to one example related to the present disclosure, the extension pipe may include a receiving groove formed at a peripheral portion of the inlet and configured to receive a part of the fusible insert when the fusible insert is melted.

There is provided a spraying container, according to another embodiment of the present disclosure, comprising the valve assembly.

### Advantageous Effects

The effects of the present disclosure obtained by the above-described solution are as follows.

The valve assembly of the present disclosure includes a flow path blocking valve portion that blocks an inlet of a communication flow path when overpressure occurs. Here, the flow path blocking valve portion includes a closing member formed of a ball-shaped steel material. Further, a fusible insert is melted when the spraying container reaches an overpressure state, releases the holding of the closing member of which displacement is restricted in a fully received state, and, in this case, is configured to fall and block a gap between the closing member disposed to cover the inlet of the communication flow path and the inlet. Accordingly, the inlet of the communication flow path is closed by the closing member and the fusible insert solidified as time elapses, thereby allowing the spraying container to relieve overpressure. In addition, the other side of the fusible insert is supported by a cover member disposed to face the other side of the fusible insert within an extension pipe, thereby allowing prevention of a phenomenon in which the fusible insert is displaced by the pressure during an operation of filling contents into the spraying container. Accordingly, a valve assembly, which has a more robust structure while providing an overpressure relieving function, and a spraying container including the same, may be provided.

Also, the cover member provided in the valve assembly of the present disclosure includes a vent hole communicating between the inlet of the communication flow path and a receiving space, and a central axis of the vent hole may be formed to correspond to a central axis of the extension pipe. According to such a structure of the valve assembly, a support structure with respect to an inner circumferential surface of the extension pipe is evenly formed, and the inner circumferential surface of the extension pipe may be supported more stably by the cover member. Accordingly, in the overpressure state of the spraying container, deformation of the inlet of the extension pipe is minimized, thereby allowing a flow path formed between the receiving space of the spraying container and the fusible insert to be secured. As a result, in the overpressure state, a function of relieving overpressure that is performed as the fusible insert is melted, may be performed more stably.

### Description of Drawings

FIG. 1 is a cross-sectional view illustrating a state of a valve assembly according to one embodiment of the present disclosure and a spraying container including the same.
FIG. 2 is a perspective view illustrating a state in which the valve assembly is mounted on a mount cup illustrated in FIG. 1.
FIG. 3 is an exploded perspective view of the valve assembly illustrated in FIG. 2.
FIG. 4 is a perspective view illustrating a cross section of the valve assembly illustrated in FIG. 2.
FIG. 5 is a cross-sectional view of the valve assembly illustrated in FIG. 4.
FIG. 6 is an enlarged view of a portion A illustrated in FIG. 5.
FIG. 7 is a cross-sectional view illustrating a part of a state in which the spraying container including the valve assembly illustrated in FIG. 1 is mounted in a receiving portion of the spraying container.
FIG. 8 and FIG. 9 are enlarged views of a portion B illustrated in FIG. 7, and are conceptual views illustrating states before and after the spraying container reaches an overpressure state, respectively.
FIG. 10 is a perspective view, a plan view, and a cross-sectional view of a fusible insert illustrated in FIG. 5.
FIG. 11 is a perspective view, a plan view, and a cross-sectional view of a cover member illustrated in FIG. 5.
FIG. 12 is a view illustrating a part of a state in which the valve assembly illustrated in FIG. 2 is viewed from an inlet side of the extension pipe.

### Detailed Description of Embodiments

A more detailed description will be made hereinafter, with reference to the drawings, with respect to a valve assembly, which has an overpressure relieving function related to the present disclosure, and a spraying container including the same.

In this specification, even in different embodiments, the same or similar reference numerals are assigned to the same or similar configurations, and duplicate descriptions thereof will be omitted.

An expression in singular form includes plural forms unless the context clearly indicates otherwise.

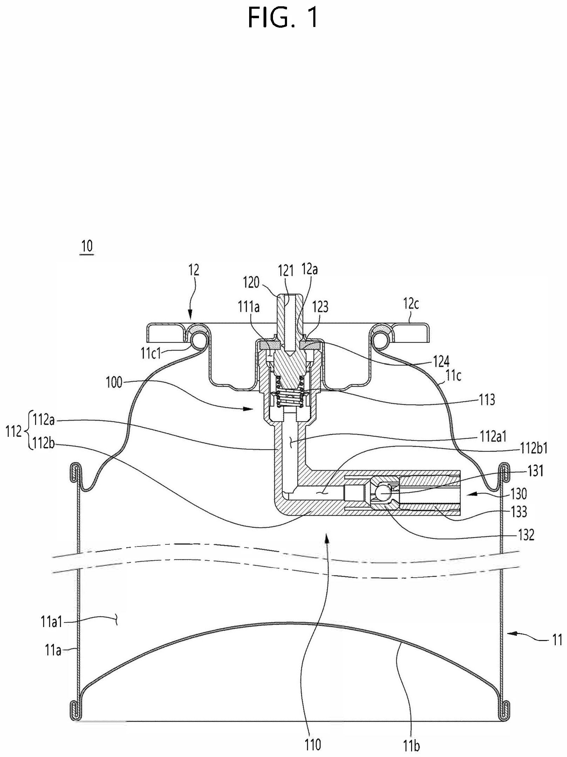

FIG. 1 is a cross-sectional view illustrating a state of a valve assembly 100 according to one embodiment of the present disclosure and a spraying container 10 including the same.

With reference to FIG. 1, a middle portion in a longitudinal direction of the spraying container 10 is illustrated as a state with omission of structures between the two cut lines as being determined to be unnecessary in describing the present disclosure, however, only a part of a side surface of the spraying container 10 between the two cut lines is omitted, and, in reality, each side surface of the spraying container 10 extends in an upward-downward direction and is connected to each other.

A housing 11 is formed in a cylindrical shape and includes a receiving space 11a1 therein, thereby being configured to accommodate contents such as a fluid or a gas and a spray gas.

The housing 11 includes a body 11a in which the receiving space 11a1 is formed, and a lower sealing cap 11b and an upper sealing cap 11c that seal both end portions of the body 11a, respectively. The lower sealing cap 11b may be formed in a shape curved toward the receiving space 11a1, and, by such a structure, when overpressure of a predetermined level or greater is applied to the receiving space 11a1, the lower sealing cap 11b may be deformed so as to expand a volume of the receiving space 11a1.

The upper sealing cap 11c may be coupled to the body 11a so as to seal an upper portion of the body 11a. The upper sealing cap 11c may form a seaming coupling portion 11c1 so as to be able to be brought into contact with the mount cup 12 by being bent or rolled. The seaming coupling portion 11c1 is formed along an edge of the mount cup 12. In the spraying container 10, a lower end of the upper sealing cap 11c and the body 11a may be coupled in a neck-out type. However, the present disclosure is not necessarily limited thereto, and, at the lower end of the upper sealing cap 11c, the body 11a may be coupled in a neck-in type. In this case, the body 11a may be formed to extend straight in the longitudinal direction.

The housing 11 may contain a fuel in a high-pressure gas state or a liquid state, and may be formed in a form such as a metal can capable of withstanding a predetermined internal pressure. However, the present disclosure is not necessarily limited thereto, and an insecticide, an air freshener, a cosmetic agent, and the like may be accommodated in the housing 11.

Also, the mount cup 12 for supporting the valve assembly 100 is coupled to an upper end of the upper sealing cap 11c.

The mount cup 12 includes, for example, a locking-shaped portion 12c so as to be mountable on a fuel-mounting device such as a gas range, and, at a center, a protruding portion 12b is provided so as to be able to fix the valve assembly 100. However, the locking-shaped portion 12c may not be present depending on the circumstances or may be formed in a different shape. For example, as another shape of the locking-shaped portion 12c, when a cosmetic agent or an insecticide and the like is contained in the housing 11, a cap having a push button for spraying may be mounted.

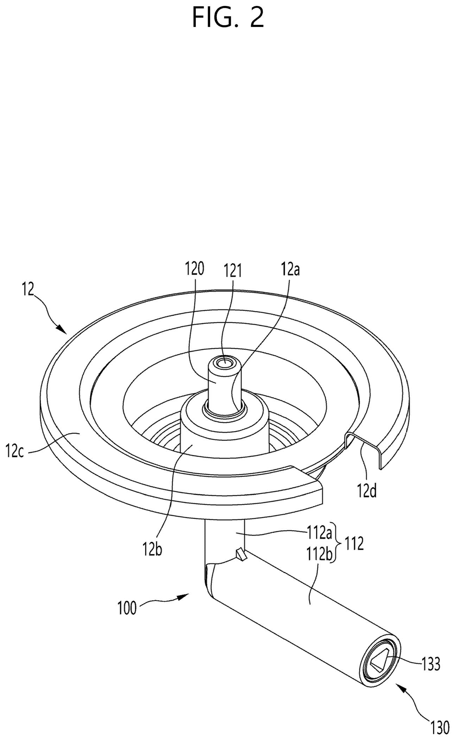

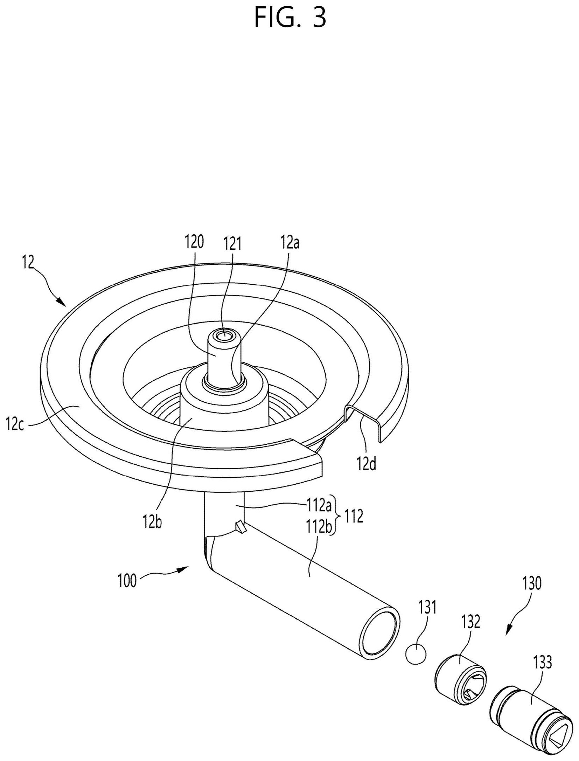

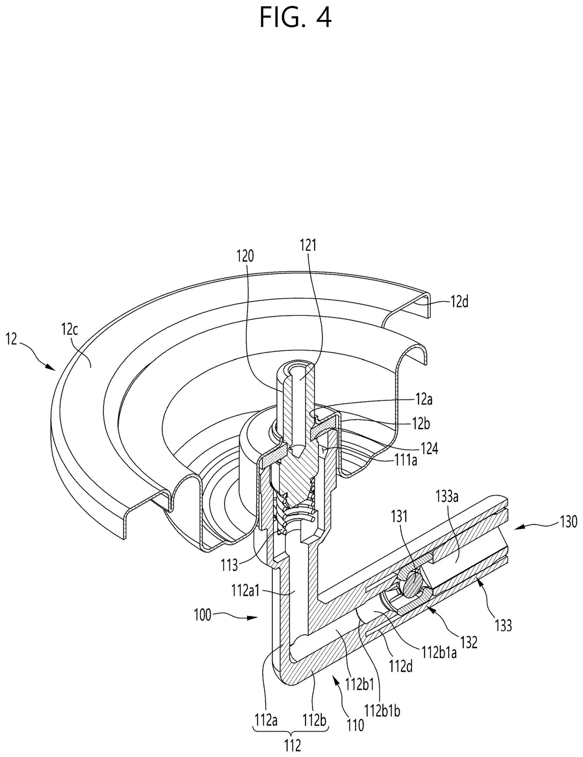

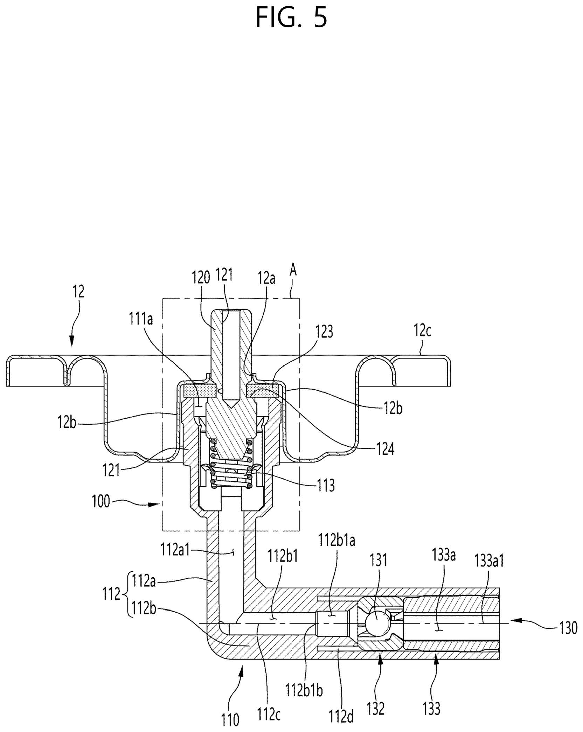

FIG. 2 is a perspective view illustrating a state in which the valve assembly 100 is mounted on the mount cup 12 illustrated in FIG. 1. FIG. 3 is an exploded perspective view of the valve assembly 100 illustrated in FIG. 2. FIG. 4 is a perspective view illustrating a cross section of the valve assembly 100 illustrated in FIG. 2. FIG. 5 is a cross-sectional view of the valve assembly 100 illustrated in FIG. 4.

With reference to FIG. 2 to FIG. 5, the mount cup 12 includes a notch groove 12d formed at one side of the locking-shaped portion 12c so as to be mountable on an external device capable of mounting the spraying container 10, for example, a gas range, a gas burner, and the like. The notch groove 12d is disposed toward an upper side of a receiving portion of the spraying container 10 when the spraying container 10 is mounted in the receiving portion of the spraying container 10 of the external device.

Meanwhile, the valve assembly 100 includes a valve stem 120 and a stem housing 110 for spraying, to the outside, contents filled in the receiving space 11a1 by pressing.

In an upper-end central portion of the protruding portion 12b of the mount cup 12, a through-hole 12a is formed.

On an inner side surface of an upper end of the protruding portion 12b of the mount cup 12, a ring-shaped opening/closing member 123 is mounted so as to cover a part of the through-hole 12a.

The valve stem 120 is mounted on an upper end of the protruding portion 12b of the mount cup 12 to be slidable in an upward-downward direction by the opening/closing member 123. An upper portion of the valve stem 120 passes through (or penetrates) a central hole of the opening/closing member 123 and the through-hole 12a and is exposed to the outside of the housing 11. A lower portion of the valve stem 120 is disposed to be received inside an upper end of the protruding portion 12b of the mount cup 12. Also, a coupling groove 124 is formed along a circumferential direction on a side surface of the valve stem 120, an inner circumferential portion of the opening/closing member 123 is inserted into and coupled to the coupling groove 124, and the valve stem 120 may be supported to be slidable in the upward-downward direction by the opening/closing member 123.

An exhaust hole 121 penetrating downward from an upper end of the valve stem 120 is formed, an orifice 122 is formed between a lower end portion of the exhaust hole 121 and the coupling groove 124, and the exhaust hole 121 may communicate with the receiving space 11a1 of the housing 11 through the orifice 122. In this case, the opening/closing member 123 surrounds the coupling groove 124 of the valve stem 120, and may selectively open and close the orifice 122 by sliding of the valve stem 120.

The stem housing 110 may include a mounting portion 111 and an extension pipe 112.

The mounting portion 111 includes a hollow portion 111a therein, and the extension pipe 112 includes a communication flow path for communicating the hollow portion 111a and the receiving space 11a1 of the housing 11. The hollow portion 111a may selectively communicate with the exhaust hole 121 through the orifice 122.

A part of the mounting portion 111 is received in an inner side of the protruding portion 12b of the mount cup 12, and includes the hollow portion 111a, thereby being disposed such that a lower portion of the valve stem 120 is slidable in the hollow portion 111a. In this case, an upper end portion of the mounting portion 111 is configured to support an outer circumferential portion of the opening/closing member 123.

A valve spring 113 is provided in the mounting portion 111, and the valve spring 113 is configured to elastically support the lower portion of the valve stem 120.

A communication flow path is provided in the extension pipe 112, and, through the communication flow path, the hollow portion 111a and the receiving space 11a1 of the housing 11 are configured to communicate with each other.

The extension pipe 112 extends from the mounting portion 111, and may be formed in an approximately L-shape. More specifically, the extension pipe 112 may be formed of a first extension portion 112a extending from the mounting portion 111 toward the lower sealing cap 11b and a second extension portion 112b bent from the first extension portion 112a. Here, the second extension portion 112b may be formed in a direction perpendicular to the first extension portion 112a.

According to such a structure of the extension pipe 112, the communication flow path 112a1 and 112b1 may be configured with a first communication flow path portion 112a1 extending in a direction the same as or similar to a longitudinal direction of the housing 11 or a sliding direction of the valve stem 120, and a second communication flow path portion 112b1 extending from the first communication flow path portion 112a1 in a lateral direction of the housing 11. The second communication flow path portion 112b1 may extend in a direction intersecting a side surface of the housing 11. An upper end portion of the first communication flow path portion 112a1 communicates with the hollow portion 111a, and an end portion of the second communication flow path portion 112b1 is disposed to be spaced apart from the upper sealing cap 11c, thereby being able to communicate with the receiving space 11a1.

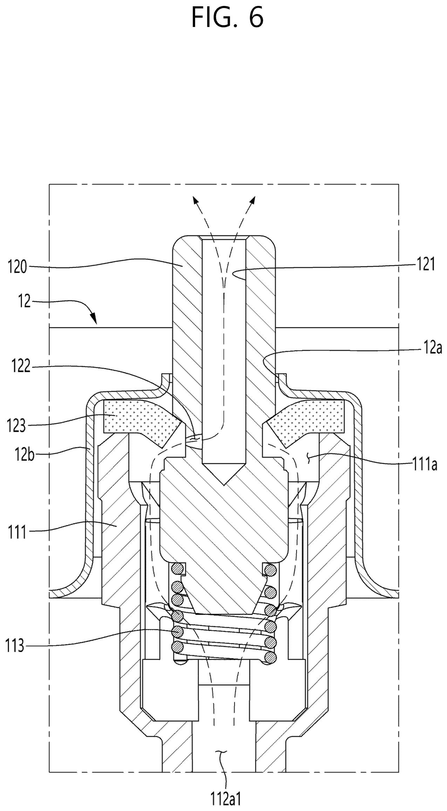

Hereinafter, with reference to FIG. 6, a gas outflow mechanism of the valve assembly 100 will be described.

FIG. 6 is an enlarged view of a portion A illustrated in FIG. 5.

When the spraying container 10 is mounted as being laid down in a horizontal direction in the receiving portion of the spraying container 10 of an external device (a gas range or a gas burner, and the like), the notch groove 12d of the mount cup 12 faces an upward direction of the receiving portion of the spraying container 10, and the second communication flow path portion 112b1 of the stem housing 110 is also disposed to face the upward direction.

In a case of the spraying container 10 using a liquid fuel, the liquid fuel may sink in a gravitational direction during use, and, on the basis of a virtual longitudinal-direction center line of the housing 11, a gaseous fuel evaporated to an upper space of the receiving space 11a1 may flow into the hollow portion 111a through the second communication flow path portion 112b1 and the first communication flow path portion 112a1.

The valve stem 120 may be pressed in a longitudinal direction of the housing 11, and, by the pressing, the valve spring 113 is compressed and the valve stem 120 slides toward the receiving space 11a1. By sliding of the valve stem 120, an inner circumferential portion of the opening/closing member 123 is pushed to the receiving space 11a1, and, by this, the orifice 122 is opened, thereby allowing the gaseous fuel of the receiving space 11a1 to be sprayed to the outside through the valve stem 120 from the hollow portion 111a of the stem housing 110. When pressing of the valve stem 120 is released, by a restoring force of the valve spring 113 that had been compressed, the valve stem 120 slides toward an opposite side of the receiving space 11a1, thereby allowing the spraying of the contents to be stopped.

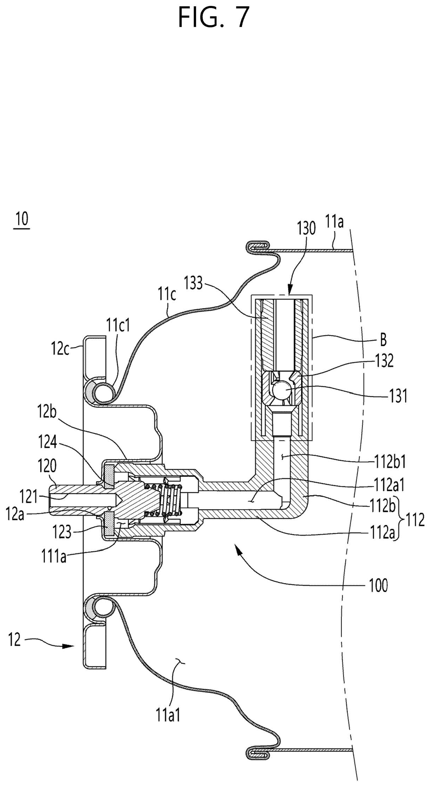

Hereinafter, an operation mechanism of a flow path blocking valve portion 130 will be described in more detail with reference to FIG. 7 to FIG. 9 together with FIG. 1 to FIG. 6.

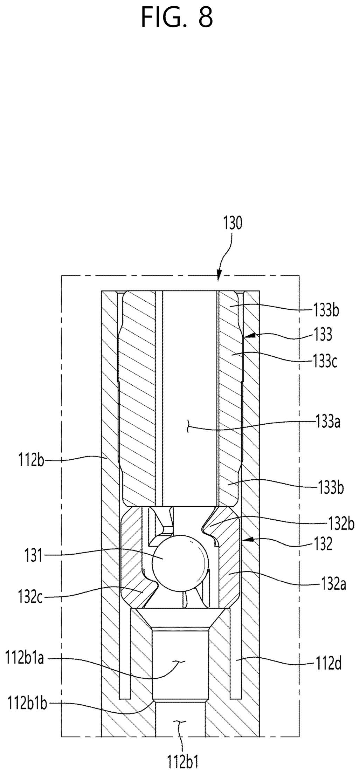

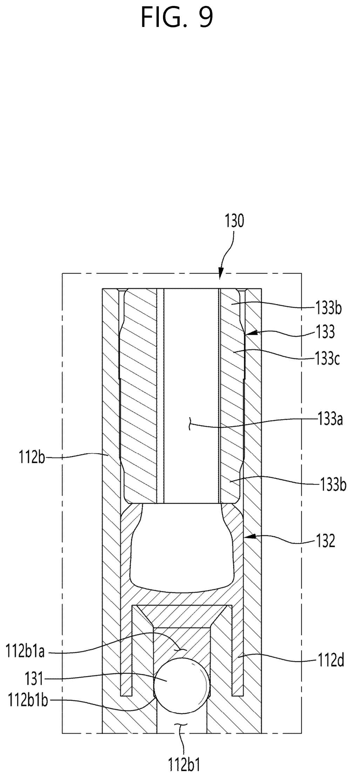

FIG. 7 is a cross-sectional view illustrating a part of a state in which the spraying container 10 including the valve assembly 100 illustrated in FIG. 1 is mounted in the receiving portion of the spraying container 10. FIG. 8 and FIG. 9 are enlarged views of a portion B illustrated in FIG. 7, and are conceptual views illustrating states before and after the spraying container 10 reaches an overpressure state, respectively.

The spraying container 10 according to the present disclosure may reach an overpressure state due to a thermal, mechanical, or chemical reason during use or storage, and, in this case, the flow path blocking valve portion 130 may be configured to close the stem housing 110 so that contents in the receiving space 11a1 in the housing 11 do not leak to the outside.

With reference to FIG. 7 to FIG. 9, the flow path blocking valve portion 130 includes a closing member 131, a fusible insert (meltable insert) 132, and a cover member 133.

The closing member 131 is formed of a ball-shaped steel material. That is, the closing member 131 may have a spherical shape. Also, for example, a diameter of the closing member 131 may be formed as 2.5 mm.

The fusible insert 132 is received (or accommodated) in the extension pipe 112 such that one side thereof, in a state of fully receiving (or accommodating) and holding the closing member 131 therein, faces the inlet 112b1a. The fusible insert 132 is melted at a preset temperature or higher, and, after releasing the holding of the closing member 131, is configured to block a gap between the closing member 131 disposed to cover the inlet 112b1a and the inlet 112b1a.

That is, when the spraying container 10 reaches an overpressure state for any reason, in this case, as the fusible insert 132 is melted by a temperature rise occurring inside the spraying container 10, a process of blocking the inlet 112b1a of the communication flow path is performed.

More specifically, as illustrated in FIG. 8, in a normal state, the fusible insert 132 is in a solid state, and is formed to maintain a structure of receiving and holding the closing member 131 therein. In this case, the closing member 131 is disposed to be completely received in the fusible insert 132 and maintains a held state without falling downward.

Further, when overpressure occurs in the spraying container 10, as illustrated in FIG. 9, when the fusible insert 132 is melted, a structure holding the closing member 131 is liquefied, and the closing member 131 falls by gravity at an earlier time than a melting of the fusible insert 132. In this case, the closing member 131 falls to the inlet 112b1a of the communication flow path 112a1 and 112b1, and is disposed to cover the inlet 112b1a. Thereafter, the fusible insert 132 that is melted flows downward relatively later than the closing member 131, and is configured to block a gap between the closing member 131 covering the inlet 112b1a and the inlet 112b1a of the communication flow path. That is, the inlet 112b1a of the communication flow path 112a1 and 112b1 is configured to be completely blocked by the closing member 131 and the fusible insert 132.

In this case, the closing member 131 may be received and caught on the inlet 112b1a of the communication flow path 112a1 and 112b1 when the fusible insert 132 is melted. For example, a depth of the inlet 112b1a of the communication flow path is formed to be larger than a size of the closing member 131, thereby allowing a closing member to be completely received in the inlet 112b1a of the communication flow path. Alternatively, a depth of the inlet 112b1a of the communication flow path may also be formed to be larger than a size of the closing member 131. In this case, in a state in which the closing member 131 is received in the inlet 112b1a of the communication flow path, a part deviating to the outside of the inlet 112b1a of the communication flow path may occur.

Also, a step portion 112b1b, protruding inward so that the closing member 131 is caught, may be provided at a tip end of the inlet 112b1a of the communication flow path 112a1 and 112b1. Further, the fusible insert 132 may be configured to be thermally fused to the closing member 131 caught on the inlet 112b1a and to the inlet 112b1a. For example, when overpressure occurs, the fusible insert 132 may be configured to cover all of the inlet 112b1a in a state in which the closing member 131 is completely received in the inlet 112b1a.

In addition, the extension pipe 112 may include a receiving groove 112d.

The receiving groove 112d may be formed at a peripheral portion of the inlet 112b1a of the communication flow path 112a1 and 112b1. The receiving groove 112d may be formed to have a predetermined depth, and may be formed to surround an outside of the inlet 112b1a. The receiving groove 112d is configured to receive a part of the fusible insert 132 when the overpressure occurs and the fusible insert 132 is melted. Accordingly, the fusible insert 132 thermally fused to the inlet 112b1a of the communication flow path 112a1 and 112b1 and the fusible insert 132 received in the receiving groove 112d may be integrally connected to form one body. According to such a structure, a fixed state of the closing member 131 disposed to close the inlet 112b1a is maintained more stably, thereby allowing a phenomenon, in which the communication flow path 112a1 and 112b1 is opened again and overpressure gas leaks to the outside of the spraying container 10, to be prevented more stably.

Meanwhile, after overpressure occurs in the spraying container 10 and, as the fusible insert 132 is melted, after a gap between the closing member 131 covering the inlet 112b1a and the inlet 112b1a of the communication flow path is blocked, when, as time elapses, overpressure of the spraying container 10 is relieved and temperature decreases, the melted fusible insert 132 solidifies again. In this case, the fusible insert 132 solidified and converted again into a solid state may be configured to robustly maintain a structure formed to completely block the closing member 131 and a peripheral gap of the closing member 131. Accordingly, even when pressure is continuously applied by gas pressure after the inlet 112b1a of the communication flow path is blocked by the flow path blocking valve portion 130, a phenomenon in which the communication flow path 112a1 and 112b1 is opened again may be prevented.

The cover member 133 is mounted on the extension pipe 112 so as to cover the other side of the fusible insert 132, thereby being configured to prevent the fusible insert 132 from being displaced within the extension pipe 112. More specifically, upon filling contents and a spray gas in the spraying container 10, gas pressure is formed in a direction opposite to a direction in which the fusible insert 132 is inserted into the extension pipe 112. The valve assembly 100 includes the cover member 133, thereby being able to effectively prevent displacement of the fusible insert 132 within the extension pipe 112 upon filling the contents and the spray gas.

Also, the cover member 133 may be configured such that at least a part of an outer circumferential surface thereof is formed to be in contact with an inner circumferential surface of the extension pipe 112 to support the extension pipe 112. Accordingly, the extension pipe 112 is structurally supported by the cover member 133, thereby being able to prevent the extension pipe 112 from being deformed by a temperature rising when overpressure occurs. Meanwhile, when the cover member 133 is absent, when overpressure occurs, the extension pipe 112 may contract by heat and deformation may occur.

Also, although not illustrated in the drawings of the present disclosure, the cover member 133 may also be formed to have a C-shaped cross section, rather than a ring-shaped cross section. Accordingly, the cover member 133 is configured to have an elastic force, thereby being able to improve workability in a process of assembling the cover member 133 in the extension pipe 112 while performing a function of the cover member 133 described above in the same as or similar manner.

As described above, the cover member 133 may perform together a function of preventing displacement of the fusible insert 132 completely receiving the closing member 131 when filling contents, and a function of preventing deformation of the extension pipe 112 by supporting an inner circumferential surface of the extension pipe 112 when overpressure occurs.

Meanwhile, the cover member 133 and an end portion on a receiving space 11a1 side of the extension pipe 112 may be formed to coincide with each other. Accordingly, the cover member 133 is configured to support an entirety of a longitudinal-direction portion of the extension pipe 112, thereby being able to prevent deformation of the extension pipe 112 more stably.

The cover member 133 may include a vent hole 133a communicating between the inlet 112b1a of the communication flow path and the receiving space 11a1. Here, a central axis 133a1 of the vent hole 133a may be formed to correspond to a central axis 112c of the extension pipe 112. For example, the central axis 133a1 of the vent hole 133a may be formed to coincide with the central axis 112c of the extension pipe 112.

According to such a structure of the valve assembly 100, a support structure with respect to an inner circumferential surface of the extension pipe 112 is evenly formed, thereby allowing the inner circumferential surface of the extension pipe 112 to be supported more stably by the cover member 133. Accordingly, in the overpressure state of the spraying container 10, deformation of the inlet 112b1a of the extension pipe 112 is minimized, thereby allowing a flow path formed between the receiving space 11a1 of the spraying container 10 and the fusible insert 132 to be secured. As a result, an overpressure relieving function by the flow path blocking valve portion 130, which is performed as the fusible insert 132 is melted when the spraying container 10 reaches the overpressure state, may be performed more stably.

As described above, the valve assembly 100 includes the flow path blocking valve portion 130 that blocks the inlet 112b1a of the communication flow path 112a1 and 112b1 when overpressure occurs. Further, the flow path blocking valve portion 130 includes the closing member 131 formed of a ball-shaped steel material. In this case, the fusible insert 132 is melted when the spraying container 10 reaches the overpressure state, releases the holding of the closing member 131 of which displacement is restricted in a fully received state, and falls to block a gap between the closing member 131 disposed to cover the inlet 112b1a of the communication flow path 112a1 and 112b1 and the inlet 112b1a.

Accordingly, the inlet 112b1a of the communication flow path 112a1 and 112b1 is closed by the closing member 131 and the fusible insert 132 solidified as time elapses, thereby allowing the spraying container 10 to relieve overpressure. Along with this, the other side of the fusible insert 132 is supported by the cover member 133 disposed to face the other side of the fusible insert 132 within the extension pipe 112, thereby being able to prevent a phenomenon in which the fusible insert 132 is displaced by the pressure during an operation of filling contents into the spraying container 10. Accordingly, the valve assembly 100 having a more robust structure while providing an overpressure relieving function, and a spraying container 10 including the same, may be provided.

Meanwhile, the fusible insert 132 is formed to be melted at 100°C or more and 130°C or less, and the cover member 133 may be formed to have a melting point of 30°C or more higher than the fusible insert 132. The cover member 133 may be formed, for example, to have a melting point of 165°C.

Also, the cover member 133 may be formed of ACETAL-Polyoxymethylene.

Also, the extension pipe 112 may be formed of the same material as the cover member 133. That is, the extension pipe 112 may be formed of ACETAL-Polyoxymethylene. In addition, the extension pipe 112 may be formed to have a melting point of 165°C similarly to the cover member 133.

Meanwhile, the cover member 133 may be formed of a material having a higher melting point than the extension pipe 112. Accordingly, the cover member 133 is formed of a material stronger against heat than the extension pipe 112, thereby being able to stably support the extension pipe 112 even when the extension pipe 112 is melted first when overpressure occurs. As a result, deformation of the extension pipe 112 may be prevented more effectively.

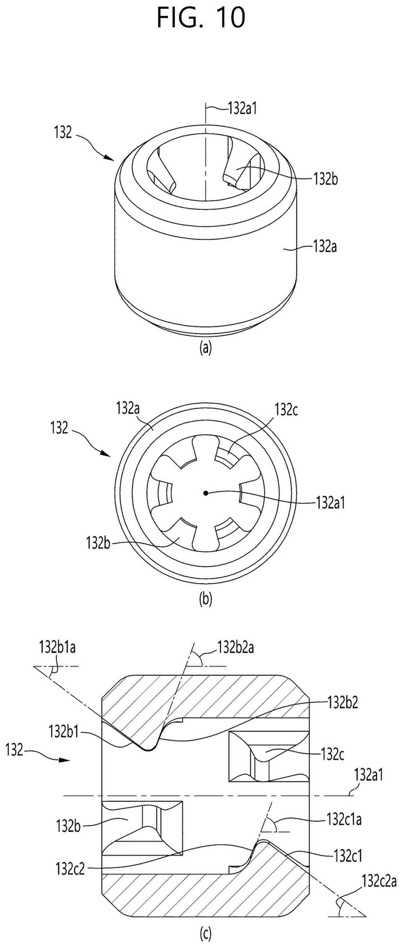

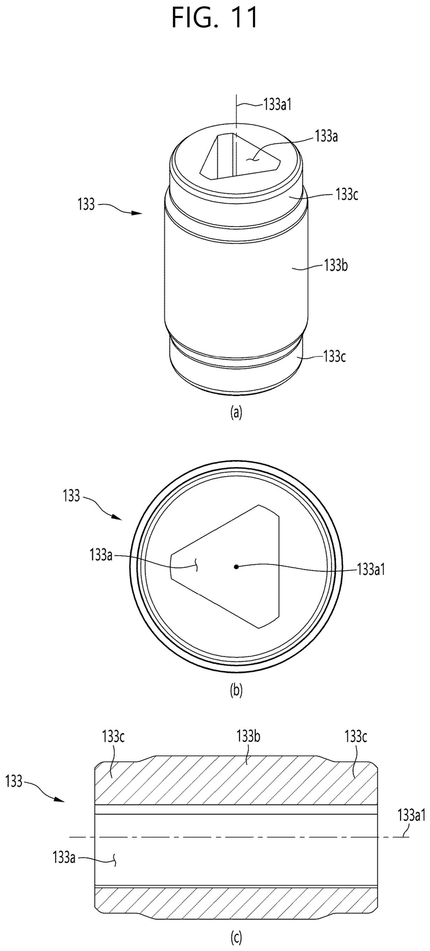

Hereinafter, structures of the fusible insert 132 and the cover member 133 will be described in more detail with reference to FIG. 10 and FIG. 11.

FIG. 10 is a perspective view, a plan view, and a cross-sectional view of the fusible insert 132 illustrated in FIG. 5. FIG. 11 is a perspective view, a plan view, and a cross-sectional view of the cover member 133 illustrated in FIG. 5.

First, with reference to FIG. 10, the fusible insert 132 may include a body portion 132a, a first catching portion 132b, and a second catching portion 132c.

The body portion 132a may be formed in a hollow shape so as to receive the closing member 131 therein.

The first catching portion 132b may protrude at predetermined intervals along the inner circumference at one side of the body portion 132a.

The second catching portion 132c may protrude at predetermined intervals along the inner circumference at the other side of the body portion 132a, thereby being able to be formed to prevent displacement of the closing member 131 together with the first catching portion 132b.

Here, the first and second catching portions 132b and 132c may each be provided in plural.

Also, the first catching portion 132b and the second catching portion 132c may be disposed to be alternated with each other along a direction of an axis 132a1 of the body portion 132a. That is, the first and second catching portions 132b and 132c may be disposed so as not to overlap with each other, on the basis of a state viewed from one side of the body portion 132a. According to such a structure of the first and second catching portions 132b and 132c, even when the first and second catching portions 132b and 132c are formed in a relatively small number, the first and second catching portions 132b and 132c forming a holding structure of the closing member 131 are disposed more densely, thereby being able to prevent displacement of the closing member 131 more effectively.

In addition, the first and second catching portions 132b and 132c may be formed symmetrically at both end portions of the body portion 132a. Accordingly, as a need to distinguish a direction in a process of assembling the fusible insert 132 in the extension pipe 112 disappears, assembling work of the fusible insert 132 may be performed more easily.

Meanwhile, the first and second catching portions 132b and 132c may each include first inclined portions 132b1 and 132c1 and second inclined portions 132b2 and 132c2.

The first inclined portions 132b1 and 132c1 may protrude to be inclined toward an inside in which the closing member 131 is received from the outside. For example, the first inclined portions 132b1 and 132c1 may be formed to have first inclination angles 132b1a and 132c1a .

The second inclined portions 132b2 and 132c2 may protrude to be inclined toward an outside from an inside in which the closing member 131 is received, at an inclination angle larger than the first inclined portions 132b1 and 132c1. For example, the second inclined portions 132b2 and 132c2 may be formed to have second inclination angles 132b2a and 132c2a larger than the first inclination angles 132b1a and 132c1a.

According to such a structure of the first and second catching portions 132b and 132c, in a process of inserting the closing member 131 into the fusible insert 132, the closing member 131 is guided by the first inclined portions 132b1 and 132c1 inclined relatively gently, thereby being able to be easily inserted into an inside of the fusible insert 132. That is, a force required to insert the closing member 131 into the fusible insert 132 may be reduced, thereby being able to improve assembly convenience of the closing member 131.

Conversely, a phenomenon in which the closing member 131 inserted into the fusible insert 132 is displaced to an outside of the fusible insert 132 by the second inclined portions 132b2 and 132c2 inclined relatively steeply, may be stably prevented.

Next, with reference to FIG. 11, the cover member 133 may include a first portion 133b and a second portion 133c.

The first portion 133b may have an outer diameter larger than an inner diameter of the extension pipe 112. The first portion 133b is formed to support an inner circumferential portion of the extension pipe 112.

The second portion 133c is formed at both end portions of the first portion 133b, and may have an outer diameter smaller than the inner diameter of the extension pipe 112. Also, centered on the first portion 133b, the first portion 133b of both end portions of the cover member 133 may be formed symmetrically with each other.

According to such a structure of the cover member 133, there is no need to distinguish a direction when assembling the cover member 133 in the extension pipe 112, thereby being able to improve user convenience by performing assembling work of the cover member 133 more easily.

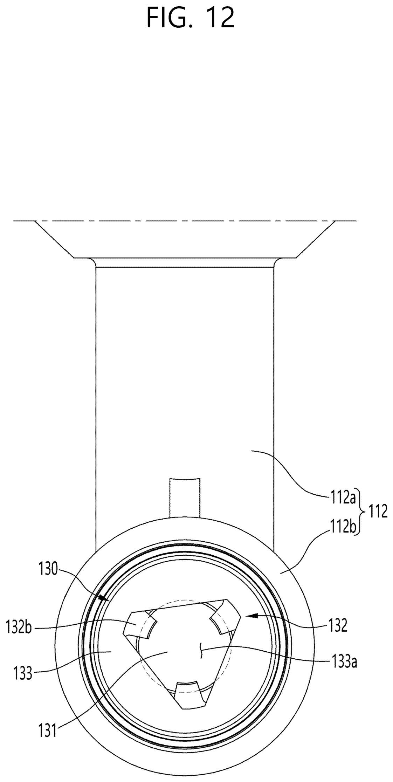

Hereinafter, a structure for preventing displacement of the closing member 131 received in the fusible insert 132 will be described with reference to FIG. 12.

FIG. 12 is a view illustrating a part of a state in which the valve assembly 100 illustrated in FIG. 2 is viewed from an inlet 112b1a side of the extension pipe 112.

With reference to FIG. 12, a portion in which the vent hole 133a is not formed may be formed to overlap with a part of the closing member 131, so that inflow of the closing member 131 into the receiving space 11a1 through the vent hole 133a of the cover member 133 is prevented by the closing member 131 being displaced from the fusible insert 132.

More specifically, upon filling contents and a spray gas in the spraying container 10, the gas pressure is formed in a direction opposite to a direction in which the fusible insert 132 is inserted into the extension pipe 112. In this case, the gas pressure acts not only on the fusible insert 132 but also on the closing member 131 received in the fusible insert 132.

Accordingly, even when a structure of the fusible insert 132 holding the closing member 131 is damaged by such gas pressure and the closing member 131 is displaced within the fusible insert 132, a portion in which the vent hole 133a is not formed in the cover member 133 is formed to overlap with a part of the closing member 131, thereby being able to prevent displacement of the closing member 131 within the extension pipe 112. In addition, even in such a case, the closing member 131, together with the fusible insert 132, may perform, as it is, a function of blocking the inlet 112b1a of the communication flow path when overpressure occurs.

The foregoing description is merely exemplary, and various modifications may be made by those skilled in the art to which the present disclosure pertains without departing from a scope and technical teachings of the described embodiments. The described embodiments may be implemented individually or in any combination.

## Claims

1. A valve assembly mounted on a mount cup fixed to an upper end of a housing including a receiving space, the valve assembly comprising:
a stem housing including a mounting portion having a hollow portion therein and mounted on the mount cup, and an extension pipe having a communication flow path communicating the hollow portion and the receiving space and extending from the mounting portion;
a valve stem having one side passing through a through-hole formed in a central portion of the mount cup and the other side disposed to allow sliding in the hollow portion, and including an orifice selectively communicating with the hollow portion by the sliding; and
a flow path blocking valve portion configured to block an inlet of the communication flow path when overpressure occurs,
wherein the flow path blocking valve portion comprises:
a closing member formed of a ball-shaped steel material;
a fusible insert received in the extension pipe so that one side thereof, in a state of completely receiving and holding the closing member therein, faces the inlet, and configured to block a gap between the inlet and the closing member disposed to cover the inlet after being melted at a preset temperature or higher to release the holding of the closing member; and
a cover member mounted on the extension pipe so as to cover the other side of the fusible insert, and configured to prevent the fusible insert from being displaced within the extension pipe.

2. The valve assembly of claim 1, wherein the cover member includes a vent hole communicating between the inlet and the receiving space, and a portion in which the vent hole is not formed is formed to overlap with a part of the closing member, so that inflow of the closing member into the receiving space through the vent hole is prevented by the closing member being displaced from the fusible insert.

3. The valve assembly of claim 2, wherein a central axis of the vent hole corresponds to a central axis of the extension pipe.

4. The valve assembly of claim 2, wherein the cover member includes:
a first portion having an outer diameter larger than an inner diameter of the extension pipe; and
a second portion formed at both end portions of the first portion and having an outer diameter smaller than the inner diameter of the extension pipe.

5. The valve assembly of claim 1, wherein the extension pipe is formed of the same material as the cover member.

6. The valve assembly of claim 1, wherein the fusible insert includes:
a body portion formed in a hollow shape so as to receive the closing member therein;
a first catching portion protruding at predetermined intervals along an inner circumference at one side of the body portion; and
a second catching portion protruding at predetermined intervals along an inner circumference at the other side of the body portion, and formed to prevent displacement of the closing member together with the first catching portion.

7. The valve assembly of claim 6, wherein the first and second catching portions are disposed to be alternated with each other along an axial direction of the body portion.

8. The valve assembly of claim 7, wherein the first and second catching portions each includes:
a first inclined portion protruding to be inclined toward an inside in which the closing member is received from an outside; and
a second inclined portion protruding to be inclined toward an outside from the inside in which the closing member is received, at an inclination angle larger than the first inclined portion.

9. The valve assembly of claim 1, wherein, when the fusible insert is melted, the closing member is received in and caught on the inlet, and the fusible insert is thermally fused to the closing member caught on the inlet and to the inlet.

10. The valve assembly of claim 9, wherein a tip end of the inlet includes a step portion protruding inward so that the closing member is caught.

11. The valve assembly of claim 9, wherein the extension pipe includes a receiving groove formed at a peripheral portion of the inlet and configured to receive a part of the fusible insert when the fusible insert is melted.

12. A spraying container comprising the valve assembly according to any one of claims 1 to 11.
